Europäisches Patentamt

European Patent Office

Office européen des brevets

(11) Veröffentlichungsnummer: **0 347 387**
**A2**

## (12) EUROPÄISCHE PATENTANMELDUNG

(21) Anmeldenummer: **89810457.5**

(22) Anmeldetag: **13.06.89**

(51) Int. Cl.⁴: **A 23 C 19/05**
**A 01 J 25/00**

(30) Priorität: **14.06.88 CH 2277/88**

(43) Veröffentlichungstag der Anmeldung:
**20.12.89 Patentblatt 89/51**

(84) Benannte Vertragsstaaten: **AT DE FR IT**

(71) Anmelder: **MATOR AG**
**Industriequartier**
**CH-6034 Inwil (CH)**

(72) Erfinder: **Fabricius, Claus**
**Irisvej 16**
**DK-3450 Alleröd (DK)**

(74) Vertreter: **Becher, Pauline, Dr. et al**
**A. Braun, Braun, Héritier, Eschmann AG Holbeinstrasse**
**36-38**
**CH-4051 Basel (CH)**

(54) **Verfahren zur Dosierung von Kupferionen bei der Käseherstellung.**

(57) Zur Dosierung von Kupferionen bei der Käseherstellung im rostfreien Stahlkessel

a) wird in das Zusatzwasser $CO_2$ eingeleitet,

b) werden mittels in das Zusatzwasser eintauchender Elektroden in dem Zusatzwasser elektrolytisch Kupferionen erzeugt,

c) werden dem $CO_2$ und Kupferionen enthaltenden Zusatzwasser die für die Käseherstellung erforderlichen Fermente zugegeben und

d) wird das $CO_2$, Kupferionen und Fermente enthaltende Zusatzwasser der Rohmilch für die Käseherstellung zugesetzt. Eine Vorrichtung zur Ausführung dieses Verfahrens ist gekennzeichnet durch

a) einen Elektrolysierbehälter (10) mit einer Anode (11), einer Kathode (12) und einer Entlüftung (13),

b) Mittel (1, 2, 3, 4, 6) zum Zuführen von Zusatzwasser in den Elektrolysierbehälter (10),

c) Mittel (5, 7, 8, 9) zum Dosieren von $CO_2$ in das Zusatzwasser,

d) einen Dosierbehälter (16) mit einer Mischeinrichtung (17),

e) Mittel (14) zum Ablassen des Zusatzwassers aus dem Elektrolysierbehälter (10) in den Dosierbehälter (16),

f) Mittel (15) zum Zugeben von Fermenten in den Dosierbehälter (16),

g) einen Milchkessel (19) mit einer Mischeinrichtung (20) und

h) Mittel (18) zum Ablassen des Zusatzwassers aus dem Dosierbehälter (16) in den Milchkessel (18).

EP 0 347 387 A2

**Beschreibung**

## Verfahren zur Dosierung von Kupferionen bei der Käseherstellung

In der Schweiz erfolgt die Herstellung von Hartkäse aus Rohmilch traditionell im Kupferkessel. Dies führt einerseits zu Problemen bei der Reinigung der Kupferkessel; da keine Säuren oder Laugen verwendet werden können, müssen die Kupferkessel von Hand geputzt werden. Andererseits hat Käsereibutter wegen des aus den Kupferkesseln stammenden, verhältnismässig hohen Kupfergehalts nur eine beschränkte Lagerstabilität.

Daher hat man seit Anfang der fünfziger Jahre versucht, Hartkäse, insbesondere Emmentaler, in rostfreien Stahlkesseln herzustellen. Die Ergebnisse waren allerdings unbefriedigend, da das Kupfer als biochemisch aktives Metall offensichtlich einen günstigen Einfluss auf das Wachstum der für die Aroma- und Säurebildung verantwortlichen Mikroorganismen sowie auf die Aktivität der Reifungsenzyme hat. Die Erfahrungen aus der Praxis zeigen, dass bei der Emmentalerherstellung im Stahlkessel wegen des Fehlens äusreichender Kupfermengen Fehler, wie Nachgärung und schlechter Geschmack des Käses, auftreten.

Deshalb hat man versucht, bei der Herstellung von Hartkäse im rostfreien Stahlkessel Kupferionen zu der Milch zuzusetzen. Die Zudosierung von verschiedenen Kupfersalzen hat sich nicht bewährt, da die erwünschten Kupfer(I)-Salze nicht löslich sind, aber leicht in Kupfer(II)-Salze übergehen, die nicht die gleiche günstige Wirkung auf die mikrobiologischen Prozesse haben wie die Kupfer(I)-Salze. Ausserdem kann durch Wägefehler oder dergleichen leicht eine ungeeignete Menge des Kupfersalzes zugegeben werden. Auch die elektrolytische Zudosierung von Kupferionen unter Verwendung einer Kupferanode, die in die Rohmilch eintaucht, hat sich als praktisch undurchführbar erwiesen, da die Milch an der Anode in wenigen Minuten koaguliert, wodurch die elektrolytische Auflösung von Kupfer vollständig verhindert wird.

Es wurde nun gefunden, dass es möglich ist, die elektrolytische Zudosierung von Kupferionen im sogenannten Zusatzwasser, das heisst, im Frischwasser, das zum Auflösen der Fermente für die Käseherstellung verwendet wird, auszuführen. Dabei werden die Elektroden praktisch nicht verschmutzt.

Das Kupfer löst sich an der Kupferanode zunächst in Form von Cu(I)-Jonen, deren Löslichkeit durch Einleiten von $CO_2$ in das Zusatzwasser erhöht werden kann. Ueberdies wird durch das im Wasser gelöste $CO_2$ die erwünschte Austreibung des Sauerstoffs begünstigt. Da an den mikrobiologischen Vorgängen der Käseherstellung meist Mikroorganismen beteiligt sind, die in saurem Milieu gedeihen, werden diese Vorgänge durch den infolge des Einleitens von $CO_2$ sauren pH-Wert des Zusatzwassers ebenfalls begünstigt.

Das erfindungsgemässe Verfahren zur Dosierung von Kupferionen bei der Käseherstellung im rostfreien Stahlkessel ist daher dadurch gekennzeichnet, dass man in das Zusatzwasser $CO_2$ einleitet, mittels in-das Zusatzwasser eintauchender Elektroden, von denen die Anode aus Kupfer und die Kathode aus Kupfer oder einem inerten Metall besteht, in den Zusatzwasser elektrolytisch Kupferionen erzeugt, dem $CO_2$ und Kupferionen enthaltenden Zusatzwasser die für die Käseherstellung erforderlichen Fermente zugibt und das $CO_2$, Kupferionen und Fermente enthaltende Zusatzwasser der Rohmilch für die Käseherstellung zusetzt.

Man kann 0,1 bis 10 g $CO_2$ pro Liter Zusatzwasser einleiten. Das Volumen des Zusatzwassers beträgt in der Regel 0,1 bis 10% des Volumens der Rohmilch. Zweckmässig erzeugt man in dem Zusatzwasser so viel Kupferionen, dass die Rohmilch 0,1 bis 10 mg Kupferionen pro Liter enthält. Zu diesem Zweck kann man 1 Minute bis 2 Stunden lang bei einer Stromstärke von 1 bis 100 Ampère elektrolysieren.

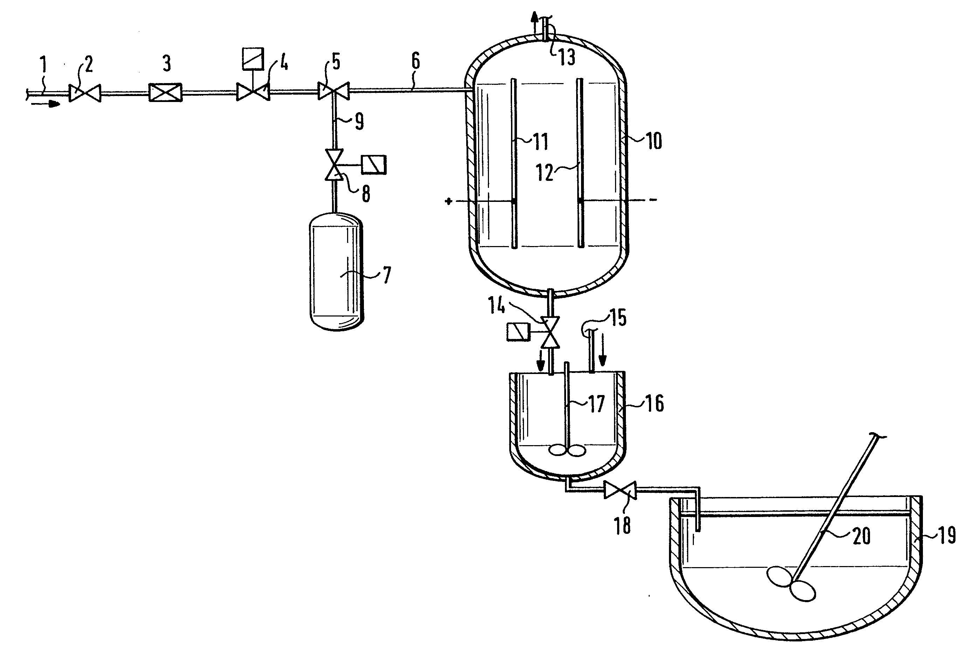

In der beiliegenden Zeichnung ist eine Ausführungsform einer Vorrichtung zur Ausführung des erfindungsgemässen Verfahrens dargestellt.

In der Zeichnung wird das Zusatzwasser (Frischwasser) bei 1 zugeführt. Die Frischwasserzufuhr kann mittels eines Absperrventils 2 abgestellt und mittels eines Druckregulierventils 3 und eines Magnetventils 4 reguliert werden. Mittels des Dosierventils 5 kann $CO_2$ aus dem mit einem Magnetventil 8 versehenen $CO_2$-Behälter 7 durch die $CO_2$-Leitung 9 in die Zusatzwasserleitung 6 eingeleitet werden.

Die Zusatzwasserleitung 6 mündet in einen Elektrolysierbehälter 10, in dem eine Anode 11 und eine Kathode 12 angeordnet sind. Der Elektrolysierbehälter 10 ist mit einer Entlüftung 13 mit einem Niveauschalter versehen; der Niveauschalter stellt die Wasser- und $CO_2$-Zufuhr ab, wenn der Elektrolysierbehälter gefüllt ist, und schaltet die Elektrolyse über ein Zeitrelais ein. Durch die Entlüftung 13 kann der bei der Elektrolyse entstehende Wasserstoff entweichen.

Mittels des Magnetventils 14 kann das Kupferionen und $CO_2$ enthaltende Zusatzwasser in den Dosierbehälter 16 abgelassen werden, in den bei 15 die für die Käseherstellung erforderlichen Fermente zugegeben werden und der mit einem Rührer 17 versehen ist. Durch das Absperrventil 18 kann das die Kupferionen, das $CO_2$ und die Fermente enthaltende Zusatzwasser in einen Milchkessel 19, der mit einem Rührer 20 versehen ist, abgelassen werden.

Das ganze Verfahren kann mittels eines (nicht dargestellten) Steuerkastens automatisch gesteuert werden, so dass Fehlmanipulationen ausgeschlossen sind.

In den folgenden Beispielen wird das erfindungsgemässe Verfahren, das in der oben beschriebenen Vorrichtung ausgeführt wurde, näher erläutert.

## Beispiele

Mit einem Start-Druckschalter wird kaltes Leitungswasser (Zusatzwasser) über ein Magnetventil 4 durch die Leitung 6 in den Elektrolysierbehälter 10, der zwei Kupferelektroden 11, 12 enthält und ein Fassungsvermögen $V_E$ hat, eingespeist. Gleichzeitig wird $CO_2$ in einer Menge $M_{CO_2}$ aus dem $CO_2$-Behälter 7 über ein Magnetventil 8, die Leitung 9 und ein Dosierventil 4 in das Zusatzwasser eingeleitet.

Wenn der Elektrolysierbehälter 10 mit dem $CO_2$ enthaltenden Zusatzwasser gefüllt ist, stellt der in die Entlüftungsleitung 13 eingebaute Niveauschalter die Wasser- und $CO_2$-Zufuhr ab und schaltet die Elektrolyse ein. Die Stromstärke $I_E$ und die Elektrolysierzeit $t_E$ werden entsprechend dem zu erreichenden Wert der Kupferkonzen tration $C_{Cu}$ in der Rohmilch eingestellt.

Nach Ablauf der Elektrolysierzeit $t_E$ wird das $CO_2$ und Kupferionen enthaltende Zusatzwasser über das Magnetventil 14 in den Dosierbehälter 16 abgelassen, mittels des Rührers 17 mit dem bei 15 zugeführten Ferment vermischt und über das Absperrventil 18 in den Milchkessel 19, der ein Fassungsvermögen $V_M$ hat, abgelassen und darin mittels des Rührers 20 mit der Rohmilch vermischt.

Die Werte von $V_M$, $V_E$, $M_{CO_2}$, $I_E$, $t_E$ und $C_{Cu}$ für die Beispiele 1 bis 5 sind in der folgenden Tabelle angegeben.

Tabelle

| Beispiel | $V_M$ Liter | $V_E$ | | $M_{CO_2}$ g/Liter | $I_E$ Ampère | $t_E$ Minuten | $C_{Cl}$ mg/Liter Milch |
|---|---|---|---|---|---|---|---|
| | | % von $V_M$ | Liter | | | | |
| 1 | 10 000 | 0,1 | 10 | 9,5 | 50 | 1 | 0,1 |
| 2 | 40 000 | 0,5 | 200 | 10 | 100 | 40 | 2 |
| 3 | 2 000 | 2 | 40 | 8 | 10 | 60 | 6 |
| 4 | 1 000 | 7 | 70 | 0,1 | 4,2 | 120 | 10 |
| 5 | 200 | 10 | 20 | 0,7 | 1 | 90 | 9 |

**Patentansprüche**

1. Verfahren zur Dosierung von Kupferionen bei der Käseherstellung im rostfreien Stahlkessel, dadurch gekennzeichnet, dass man in das Zusatzwasser $CO_2$ einleitet, mittels in das Zusatzwasser eintauchender Elektroden, von denen die Anode aus Kupfer und die Kathode aus Kupfer oder einem inerten Metall besteht, in dem Zusatzwasser elektrolytisch Kupferionen erzeugt, dem $CO_2$ und Kupferionen enthaltenden Zusatzwasser die für die Käseherstellung erforderlichen Fermente zugibt und das $CO_2$, Kupferionen und Fermente enthaltende Zusatzwasser der Rohmilch für die Käseherstellung zusetzt.

2. Verfahren nach Anspruch 1, dadurch gekennzeichnet, dass man 0,1 bis 10 g $CO_2$ pro Liter Zusatzwasser einleitet.

3. Verfahren nach Anspruch 1 oder 2, dadurch gekennzeichnet, dass das Volumen des Zusatzwassers 0,1 bis 10% des Volumens der Rohmilch beträgt.

4. Verfahren nach einem der Ansprüche 1 bis 3, dadurch gekennzeichnet, dass man in dem Zusatzwasser so viel Kupferionen erzeugt, dass die Rohmilch 0,1 bis 10 mg Kupferionen pro Liter enthält.

5. Verfahren nach einem der Ansprüche 1 bis 4, dadurch gekennzeichnet, dass man die elektrolytische Erzeugung von Kupferionen 1 Minute bis 2 Stunden lang bei einer Stromstärke von 1 bis 100 Ampère ausführt.

6. Vorrichtung zur Ausführung des Verfahrens nach einem der Ansprüche 1 bis 5, gekennzeichnet durch

    a) einen Elektrolysierbehälter (10) mit einer Anode (11), einer Kathode (12) und einer Entlüftung (13),

    b) Mittel (1, 2, 3, 4, 6) zum Zuführen von Zusatzwasser in den Elektrolysierbehälter (10),

    c) Mittel (5, 7, 8, 9) zum Dosieren von $CO_2$ in das Zusatzwasser,

    d) einen Dosierbehälter (16) mit einer Mischeinrichtung (17),

    e) Mittel (14) zum Ablassen des Zusatzwassers aus dem Elektrolysierbehälter (10) in den Dosierbehälter (16),

    f) Mittel (15) zum Zugeben von Fermenten in den Dosierbehälter (16),

    g) einen Milchkessel (19) mit einer Mischeinrichtung (20) und

    h) Mittel (18) zum Ablassen des Zusatzwassers aus dem Dosierbehälter (16) in den Milchkessel (18).